# EUROPÄISCHE PATENTSCHRIFT

(11) **EP 4 013 974 B1**
(45) Veröffentlichungstag und Bekanntmachung des Hinweises auf die Patenterteilung: **12.07.2023**
(21) Anmeldenummer: 19756338.0
(22) Anmeldetag: 16.08.2019
(51) Int. Cl.: F16D 65/56

(54) **SCHEIBENBREMSE MIT EINER STELLSPINDEL**
DISC BRAKE WITH ADJUSTING SPINDLE
FREIN A DISQUE AVEC BROCHE DE RÉGLAGE

(43) Veröffentlichungstag der Anmeldung: 22.06.2022
(73) Patentinhaber: ZF CV Systems Europe BV, 1170 Brüssel (BE)
(72) Erfinder: MITTENDORF, Roman-Marius, 64646 Heppenheim (DE); STUMPF, Martin, 68623 Lampertheim (DE)
(74) Vertreter: Ohlendorf, Henrike
(86) Internationale Anmeldenummer: PCT/EP2019/071988
(87) Internationale Veröffentlichungsnummer: WO 2021/032262

(56) Entgegenhaltungen:
- WO-A1-2004/046579
- WO-A1-2010/024400
- DE-A1-102014 017 430
- DE-A1-102015 013 240
- DE-U1-202010 003 739
- US-A1- 2017 307 035

## Beschreibung

Die Erfindung betrifft eine Scheibenbremse mit einer Stellspindel, insbesondere betrifft die Erfindung eine Scheibenbremse für Kraftfahrzeuge mit einer Stellspindel und einer Nachstelleinheit.

Scheibenbremsen für Kraftfahrzeuge sind allgemein bekannt und weisen zum Zuspannen einer Bremsscheibe eine Zuspanneinheit auf, die eine Stellspindel, ein Druckstück und eine Nachstelleinheit umfasst. Das Druckstück weist axial zur der Bremsscheibe eine Öffnung auf, wobei in der Öffnung ein Gewinde zum Führen der Stellspindel angeordnet ist. Ein in der Stellspindel angeordneter Gewindering dient in Kombination mit einer Tellerfeder zur Sicherung der Stellspindel gegen ungewollte Zustellbewegungen oder Rückstellbewegungen. Über einen mit einem Drehhebel der Zuspanneinheit in Verbindung stehenden Bremszylinder wird die Bremsscheibe durch eine Drehbewegung des Drehhebels in Richtung der Bremsscheibe zugespannt, indem das Druckstück mit der Stellspindel und der Nachstelleinheit axial in Richtung der Bremsscheibe verschoben wird und den zuspannseitigen Bremsbelag über einen Druckteller der Stellspindel gegen die Bremsscheibe drückt. Durch den Kontakt des Drucktellers setzt zunächst eine Verschiebung des Bremssattels entgegen der Richtung der Bremsscheibe ein, und zwar so lange bis der reaktionsseitige Bremsbelag in Kontakt mit der Bremsscheibe steht, wodurch die Bremsscheibe durch den zuspannseitigen Bremsbelag und den reaktionsseitigen Bremsbelag zugespannt wird. Als Zuspannseite ist die Seite der Scheibenbremse zu verstehen, an der die Zuspanneinheit angeordnet ist. Als Felgenseite ist dagegen diejenige Seite der Scheibenbremse zu verstehen, die sich entgegengesetzt der Zuspannseite der Scheibenbremse befindet. Durch den Bremsvorgang erfolgt ein Abrieb der Bremsbeläge, was zur Folge hat, dass ein Lüftspiel, also der Abstand zwischen der Bremsscheibe und den Bremsbelägen, mit zunehmendem Abrieb der Bremsbeläge größer wird. Mit einem zunehmend größeren Lüftspiel vergrößert sich der Hebelweg zum Zuspannen der Scheibenbremse, wodurch eine Verzögerung der Bremsung einsetzt und wobei ein Fahrzeug, aufgrund des verschobenen Druckpunkts der Bremse, mit einer Verzögerung abgebremst wird. Aus den genannten Gründen muss der Verschleiß der Bremsbeläge durch eine Korrektur des Lüftspiels ausgeglichen werden, um die vollständige Funktionsfähigkeit und Leistungsfähigkeit der Scheibenbremse zu gewährleisten. Die Korrektur des Lüftspiels erfolgt durch eine bedarfsgerechte axiale Zustellbewegung der Stellspindel in Richtung der Bremsscheibe.

Während der Zustellbewegung der Stellspindel kann die Situation auftreten, dass die Stellspindel, axial in Richtung der Bremsscheibe, zu weit gedreht wird. In der zuvor beschriebenen Situation besteht die Gefahr einer zu geringen Kontaktüberdeckung der Stellspindel mit weiteren Bauteilen der Zuspanneinheit, umfassend eine Schlingfeder der Nachstelleinheit oder eine Führungshülse der Nachstelleinheit, aus dem Druckstück herausgedreht wird. Unter einer Kontaktüberdeckung ist der Bereich der Zustelleinheit gemeint, der mit der Stellspindel in Kontakt steht. Darüber hinaus kann auch eine fehlende Kontaktüberdeckung bei einer falschen Handhabung einer Rückstelleinheit der Scheibenbremse auftreten. Für einen Belagwechsel wird die Stellspindel über die Rückstelleinheit manuell, entgegengesetzt der Bremsscheibe, axial herausgedreht. Beide o.g. Situationen können, teilweise Seite 2a (Reinschrift)

unbemerkt, einen schlagartigen Verlust der Nachstellfunktion der Nachstelleinheit der Scheibenbremse zur Folge haben. Die US 2017/ 307035 A1 beschreibt eine Scheibenbremse für Kraftfahrzeuge umfassend eine Bremsscheibe, einen Bremssattel, mindestens einer auf einer Seite der Bremsscheibe innerhalb des Bremssattels liegenden Zuspanneinrichtung, einem axial verschieblichen Druckstück, das bei Betätigung der Bremse einen Bremsbelag mittels mindestens einer Stellspindel axial in Richtung der Bremsscheibe verschiebt, wobei die Stellspindel drehbar ist, ein Außengewinde aufweist und in eine als Öffnung ausgebildete Gewindebohrung in das Druckstücks eingeschraubt ist, und ein Nachstellgetriebe zum Einstellen eines Lüftspiels aufweist, wobei die Stellspindel abschnittsweise in die Gewindebohrung des Druckstücks hineinragt.

Die DE 10 2014 111 229 B4 offenbart eine Scheibenbremse, die ein Herausfallen des Bremssattels aus dem zuspannseitigen Bremsbelagträger verhindern soll. Ein als Hülse ausgebildetes eigenständiges Anschlagselement ist an dem Bremssattel oder einem mit dem Bremssattel in Korrespondenz stehenden Bauteil angeordnet.

Es ist die Aufgabe der Erfindung, eine Begrenzung der Drehbewegung der Stellspindel einer Scheibenbremse ohne Einsatz zusätzlicher Bauteile, sowie ohne Vergrößerung der zylindrischen Außenkontur der Stellspindel bereitzustellen und wobei die Begrenzung gleichzeitig als Verliersicherung dient.

Die Aufgabe wird durch eine Begrenzung in einem Gewindegang einer Stellspindel gelöst. Unter einem Gewindegang ist eine profilierte Einkerbung zu verstehen, die fortlaufend gewindeartig um eine zylinderförmige Wandung der Stellspindel in einer Schraubenlinie verläuft. Die Position der Begrenzung ist entlang der gesamten axialen Gewindelänge freiwählbar, wodurch eine Feinabstimmung zur Begrenzung der Drehbewegung der Stellspindel möglich ist. Durch die Begrenzung der Drehbewegung wird ein Herausfallen der Stellspindel aus einer Nachstelleinheit verhindert. Die Begrenzung ist bevorzugt aus der Spindel geformt. Das heißt, die Begrenzung weist bei einer aus der Stellspindel geformten Begrenzung die gleiche Materialzusammensetzung und daher die gleiche Materialfestigkeit wie die Stellspindel auf. Eine vorzeitige Materialermüdung der Begrenzung gegenüber der Stellspindel ist aufgrund der gleichen Materialzusammensetzung, unter Berücksichtigung der Art der Realisierung der Begrenzung, weitestgehend minimiert. Die Begrenzung kann aber auch als separates Bauteil auf der Stellspindel angeordnet sein, wodurch die Haltedauer einer Stellspindel steigt, da nach einem Verschleiß der Begrenzung nur die Begrenzung, nicht aber die Stellspindel ausgetauscht werden muss.

Die Begrenzung ist zum Blockieren der Stellspindel nicht auf eine Gewindeeinheit oder einen Teilbereich der Nachstelleinheit begrenzt. Es ist jede beliebige Form eines Anschlags zum Blockieren der Begrenzung und eine Anordnung des Anschlags zum Blockieren der Begrenzung außerhalb der Gewindeeinheit und außerhalb der Nachstelleinheit denkbar. Die Form der Gewindeeinheit ist nicht beschränkt. Bevorzugt ist die Gewindeeinheit als Gewindering ausgebildet. Der Gewindering ist in dem Druckstück angeordnet und ist in Kontakt mit dem Gewinde der Stellspindel.

Die Begrenzung ist in einer weiteren Ausgestaltung radial in Richtung der Nachstelleinheit ausgebildet und weist eine Höhe auf, die größer ist als eine Höhe eines Gewindegrunds des Gewindegangs der Stellspindel. Als Gewindegrund ist der tiefste Bereich des Gewindegangs, ausgehend von einer axialen Achse der Stellspindel, zu verstehen. Die Höhe, d.h. die radiale Ausrichtung der Begrenzung in Richtung einer Gewindegangspitze, ist so zu bemessen, dass die Begrenzung an einem Anschlag der Scheibenbremse, bevorzugt an einem Anschlag der Gewindeeinheit, besonders bevorzugt an einem als Zahnflanke ausgebildeten Anschlag der Gewindeeinheit, anschlägt und die Stellspindel blockiert, weshalb die Stellspindel nicht weiter in Richtung der Bremsscheibe herausgedreht werden kann.

Die Begrenzung ist in einer weiteren vorteilhaften Ausgestaltung ein Teilbereich einer Gewindeflanke der Stellspindel. Die Begrenzung der Stellspindel wird durch eine Deformation eines Teilbereichs der Gewindeflanke erzielt. Der dem deformierten Teilbereich der Gewindeflanke gegenüberliegende Teilbereich einer Gewindeflanke eines gegenüberliegenden Gewindegangs ist ebenfalls deformiert. Die Deformation eines Teilbereichs der Gewindeflanke ist gegenüber ein zusätzliches als Begrenzung ausgebildetes Bauteil kostengünstiger.

Darüber hinaus hat sich gezeigt, dass die Begrenzung in einer weiteren Ausführung durch eines der Herstellungsverfahren umfassend, spangebende Fertigung, formgebende Fertigung oder auftragende Fertigung hergestellt ist. Abhängig von dem Herstellungsverfahren ist die Fertigung der Begrenzung teilweise in den Herstellungsprozess der Stellspindel vollständig integrierbar. Bei einer spangebenden Fertigung der Stellspindel wird an der Stelle der Stellspindel, an dem die Begrenzung angeordnet werden soll, Material oder kein Material in dem Gewindegang abgetragen. Die Abtragung des Materials darf nicht bis zum Gewindegrund erfolgen. Bei der spanenden Fertigung erfolgt in dem Bereich zur Ausbildung der Begrenzung eine Anpassung der Werkzeugbahnkurve des Werkzeugs, besonders bevorzugt durch Wendeschneidplatten, welches den Gewindegang ausbildet. Unter einer Werkzeugbahnkurve ist der Verlauf des Werkzeugs entlang einer vordefinierten Wegstrecke zu verstehen.

Bei einer formgebenden Fertigung der Begrenzung wird wiederum an der Stelle der Stellspindel, an der die Begrenzung ausgebildet werden soll, keine vollständige Umformung des Gewindegangs unter Anpassung der Werkzeuggeometrie des Umformwerkzeugs durchgeführt. Bei den beschriebenen Fertigungen, nämlich der formgebenden Fertigung und der spanenden Fertigung, wird die Begrenzung direkt in dem Rohling zur Ausbildung der Stellspindel realisiert. In dem dritten Verfahren, auch als Auftragen oder Beschichten bekannt, wird zur Ausbildung der Begrenzung in dem Gewindegang Material aufgetragen. Dem Fachmann ist als auftragendes Fertigungsverfahren beispielsweise Schweißen, Kleben oder Löten bekannt. Bei der Ausgestaltung einer Begrenzung mittels eines Klebeprozesses ist der Einsatz eines unter einem UV-Licht aushärtenden Klebstoffs denkbar. Es sind aber auch andere Typen von Klebstoffen zur Ausgestaltung der Begrenzung denkbar.

Sofern die Begrenzung durch das Herstellungsverfahren formgebende Fertigung hergestellt ist, ist die formgebende Fertigung in einer bevorzugten Ausführung ein Gewindewalzprozess. Unter dem Begriff Gewindewalzen versteht der Fachmann ein Umformen und Verfestigen metallischer Oberflächen. Beim Gewindewalzen wird eine Gewinderolle oder es werden mehrere Gewinderollen mit einer senkrecht zur Lauffläche gerichteten Kraft, auch bekannt als Walzkraft, beaufschlagt. Es findet an der Stelle der Stellspindel, an dem die Begrenzung ausgebildet werden soll, keine bzw. keine vollständige Verformung, also keine Ausbildung des Gewindes, statt. Es ist auch denkbar mittels des Gewindewalzprozesses den vollständigen Gewindegang auszugestalten.

Es hat sich zudem in einer weiteren Ausgestaltung als Vorteil erwiesen, dass der Teilbereich der Gewindeflanke der Stellspindel durch das Herstellungsverfahren Pressen deformiert ist. Das Pressen von Eisenwerkstoffen ist auch als Umformprozess bekannt, bei dem unter hohen Drücken der Metallwerkstoff, daher das Rohteil zur Ausbildung der Spindel, deformiert wird. Wie bereits in der dritten vorteilhaften Ausführung beschrieben, wird die Drehbegrenzung der Stellspindel durch eine Deformation eines Teilbereichs der Gewindeflanke erzielt.

In einer weiteren vorteilhaften Ausführung weist die Begrenzung hinsichtlich der radialen Ausprägung eine Abmessung auf, die größer ist als der Abstand eines Anschlags der Gewindeeinheit, bezogen auf eine axiale Achse der Stellspindel. Mit der radialen Ausprägung der Begrenzung wird sichergestellt, dass der Anschlag an die Begrenzung auch tatsächlich anschlägt und die Stellspindel an einem weiteren Herausdrehen aus der Nachstelleinrichtung hindert.

Die radiale Ausprägung der Begrenzung ist abhängig von der Ausgestaltung des Gewindes, also die Form, Höhe, Breite und Tiefe des Gewindes und der Ausgestaltung des Anschlags der Gewindeeinheit.

In einer weiteren Ausführung verläuft zumindest ein in radialer Richtung sich erstreckender Bereich der Begrenzung und der Anschlag der Gewindeeinheit zueinander in einem weitestgehend gleichmäßigen Abstand. Das heißt, dass zwischen der Seitenflanke der Begrenzung und dem als Zahnflanke ausgebildeten Anschlag möglichst keine Unterschiede in der geometrischen Ausprägung vorhanden sind, die zu einem Verklemmen der Begrenzung mit dem Anschlag der Gewindeeinheit führen können.

In einer letzten Ausführung ist die Begrenzung dazu eingerichtet, dass die Begrenzung an einem Anschlag der Gewindeeinheit anstößt, um ein axiales Herausdrehen der Stellspindel in Richtung einer Bremsscheibe der Scheibenbremse zu verhindern. Während eines Rückstellvorgangs der Stellspindel greift der Anschlag der Gewindeeinheit in den Gewindegang der Stellspindel und blockiert das weitere Herausdrehen der Stellspindel in Richtung der Bremsscheibe, wenn die Begrenzung den Anschlag der Gewindeeinheit erreicht hat.

Nachfolgend werden ausgewählte Ausführungsbeispiele der Erfindung anhand der beigefügten Figuren erläutert.

Es zeigt:
Fig. 1 eine Scheibenbremse mit einer Stellspindel nach dem Stand der Technik,
Fig. 2 eine Zuspanneinheit einer Scheibenbremse nach Fig. 1 in einer seitlich geschnittenen Ansicht,
Fig. 3 einen Ausschnitt der Stellspindel nach Fig. 2 mit einer durch einen Umformprozess ausgestalteten Begrenzung,
Fig. 3a eine Stellspindel einer Zuspanneinheit nach Fig. 2 und 3 in der Draufsicht,
Fig. 4 einen Ausschnitt der Stellspindel nach Fig. 2 mit einer spanend gefertigten Begrenzung,
Fig. 5 einen Ausschnitt der Stellspindel nach Fig. 2 mit einer durch Walzen gefertigten Begrenzung,
Fig. 6 eine Stellspindel mit einer durch Kleben gefertigten Begrenzung nach aus einer Draufsicht.

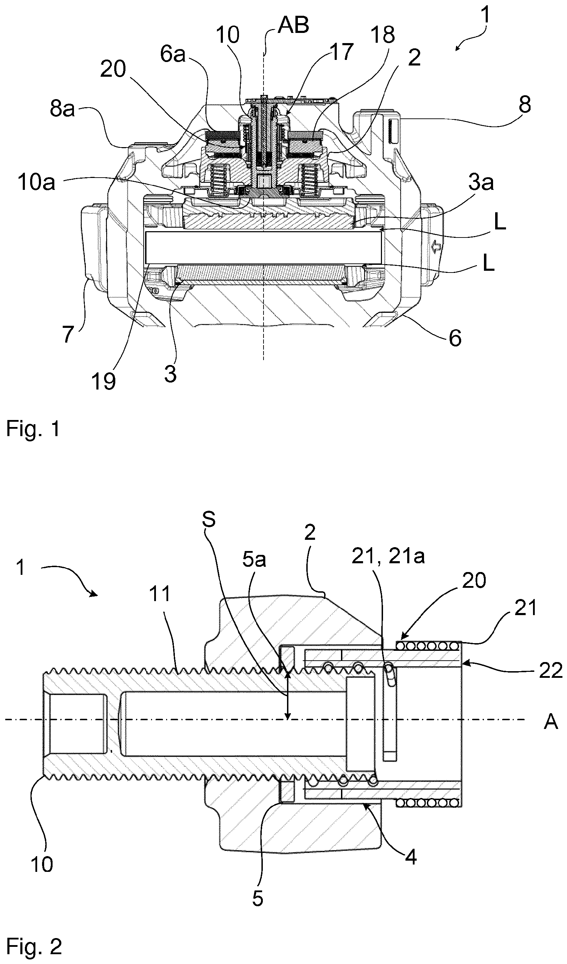

In Fig. 1 ist eine Scheibenbremse 1 mit einer Stellspindel 10 nach dem Stand der Technik aus der Draufsicht gezeigt. Die Scheibenbremse 1 weist einen Bremssattel 6 auf, der mittels Führungsbolzen 8, 8a gleitend auf einen Bremsenträger 7 gelagert ist. Die Stellspindel 10 ist als Teil einer Zuspanneinheit 17, mittig, entlang einer axialen Achse AB der Scheibenbremse 1, im Bremssattel 6 angeordnet. Die Zuspanneinheit 17 umfasst weiterhin einen Drehhebel 18, der sich an einer Innenwand 6a des Bremssattels 6 abstützt. Der Drehhebel 18 spannt axial, in Richtung der axialen Achse AB der Scheibenbremse 1, eine Bremsscheibe 19 über ein Druckstück 2 und über zwei Bremsbeläge 3, 3a zu. Zur Einstellung eines Lüftspiels L ist zusätzlich an der Stellspindel 10 eine Nachstelleinheit 20 angeordnet. Die Korrektur des Lüftspiels L erfolgt bei Bedarf während der Zustellbewegung des Drehhebels 18 oder genauer gesagt, während der Überbrückung des Lüftspiels L. Während des Zustellvorgangs drückt ein an der Stellspindel 10 axial angeordneter Druckteller 10a gegen den Bremsbelag 3a, wobei der Bremsbelag 3a in Richtung der Bremsscheibe 19 verschoben wird. Mit einem zunehmenden Bremsbelagverschleiß bewegt sich die Stellspindel 10 zur Einstellung des Lüftspiels L weiter in Richtung der Bremsscheibe 19.

Die Maximalstellung, also der Grenzzustand der Stellspindel 10 gemäß Fig. 1, ist in Fig. 2 abgebildet. Als Grenzzustand ist der Zustand der Stellspindel 10 gemeint, bei dem die Stellspindel 10 über die Nachstelleinheit 20 gerade noch verstellt werden kann. Ein weiteres Herausdrehen der Stellspindel 10 aus dem Druckstück 2 und der auf der Stellspindel 10 angeordneten Nachstelleinheit 20 hat zur Folge, dass die Stellspindel 10 nicht mehr über die Nachstelleinheit 20 verstellt werden kann und die Nachstelleinheit 20 nicht in Position bleibt oder ggf. verklemmt, wodurch die Nachstelleinheit 20 ihre Nachstellfunktion verliert. Die Nachstelleinheit 20 weist Federelemente 21 und Führungsbuchsen 22 auf, wobei die Stellspindel 10 über eine Schlingfeder 21a mit der Nachstelleinheit 20 verbunden ist. Die Schlingfeder 21a ist ein Bestandsteil der Nachstelleinheit 20. Sowohl die Stellspindel 10, als auch die Nachstelleinheit 20 sind axial entlang der Achse der Stellspindel 10 teilweise in dem Druckstück 2 angeordnet. Genauer ausgedrückt ist die Nachstelleinheit 20 auf der Stellspindel 10 gelagert.

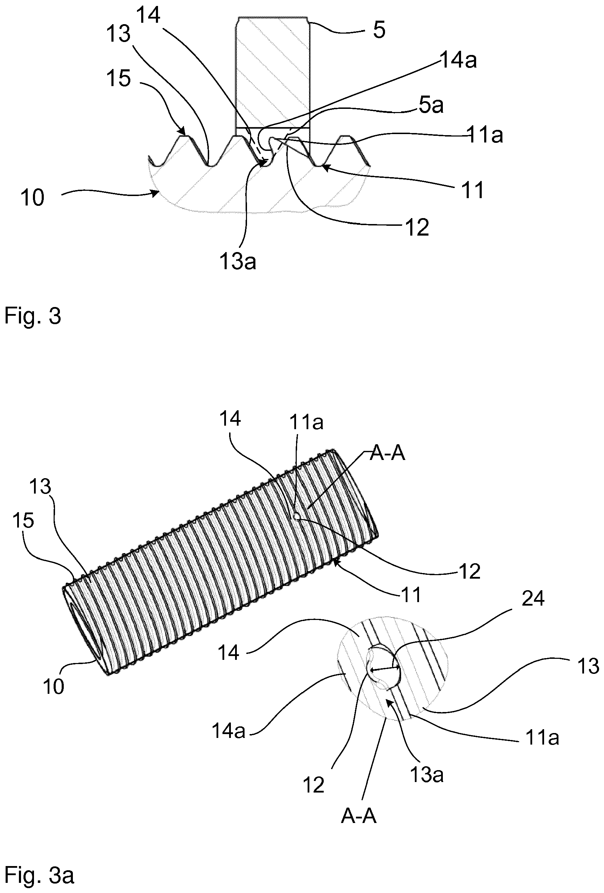

Fig. 3 zeigt eine Stellspindel 10 nach Fig. 1 und Fig. 2 mit einer erfindungsgemäßen Begrenzung 12. Die Begrenzung 12 ist als umgeformte Begrenzung 12 ausgebildet und verhindert ein weiteres Herausdrehen der Stellspindel 10 aus der Nachstelleinheit 20 (s. Fig. 1 und Fig. 2) durch Blockierung des als Zahnflanke 5a ausgebildeten Anschlags 5a der Gewindeeinheit 5. Zur Ausbildung der Begrenzung 12 wird ein Ausschnitt einer Gewindeflanke 14 mit einem Presswerkzeug umgeformt. Von einem Gewindegrund 13 des Gewindes 15 aus gesehen ist der Steigungswinkel der umgeformten Gewindeflanke 14a im Vergleich zum ursprünglichen Steigungswinkel verändert worden. Ein Teilbereich der umgeformten Gewindespitze 11a überspannt so den zwischen der Gewindeflanke 14a und der Gewindeflanke 14 angeordneten Bereich 13a des Gewindegrunds 13 teilweise. Die Begrenzung 12 weist hinsichtlich der radialen Ausprägung eine Abmessung auf, die größer ist als der Abstand S eines schemenhaft dargestellten Anschlags 5a der Gewindeeinheit 5, bezogen auf eine axiale Achse A der Stellspindel.

In Fig. 3a ist die Stellspindel nach Fig. 1, Fig. 2 und Fig. 3 mit der umgeformten Begrenzung 12 aus einer Draufsicht gezeigt. Deutlich zu erkennen ist ein Wirkdurchmesser 24 des Umformwerkzeugs.

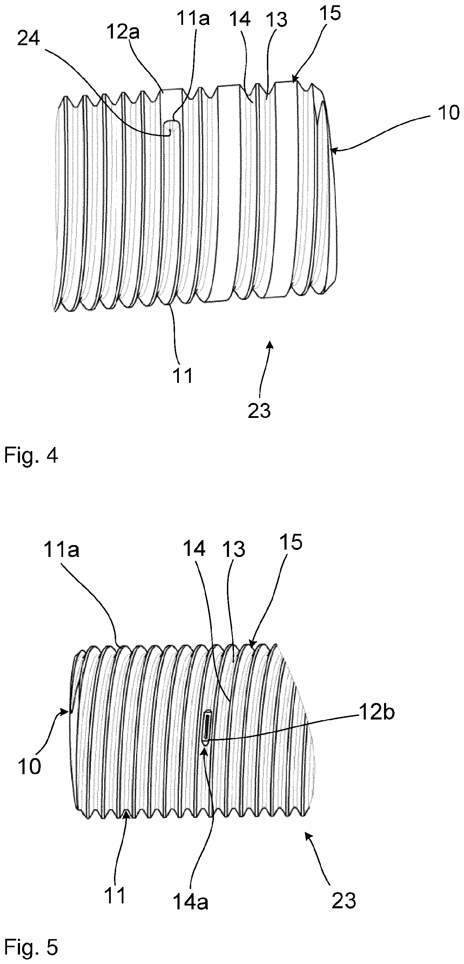

Eine weitere Ausführung der Begrenzung 12 ist in Fig. 4 zu sehen. Fig. 4 zeigt einen Ausschnitt der Stellspindel 10 nach Fig. 1 und Fig. 2 mit einer spanend gefertigten Begrenzung 12a. Die Begrenzung 12a ist in einem Endbereich 23 der Stellspindel 10 ausgebildet. Der Endbereich 23 ist der dem Druckteller 10a (Fig. 1) gegenüberliegende Bereich der Stellspindel 10. Das Gewinde 15 ist in die Stellspindel 10 geschnitten, wobei die Begrenzung 12a ein nicht bearbeiteter Abschnitt des Gewindes 15 ist. Der Gewindegang 11 ist also im Bereich der Begrenzung 12a nicht ausgebildet.

Fig. 5 zeigt einen Ausschnitt der Stellspindel nach Fig. 1 und Fig. 2 mit einem durch Walzen gefertigten Begrenzung 12b. Die Begrenzung 12b wird während der Herstellung der Stellspindel 10 an einer beliebigen Position entlang der Spindelachse in einem Gewindegang 11 angebracht.

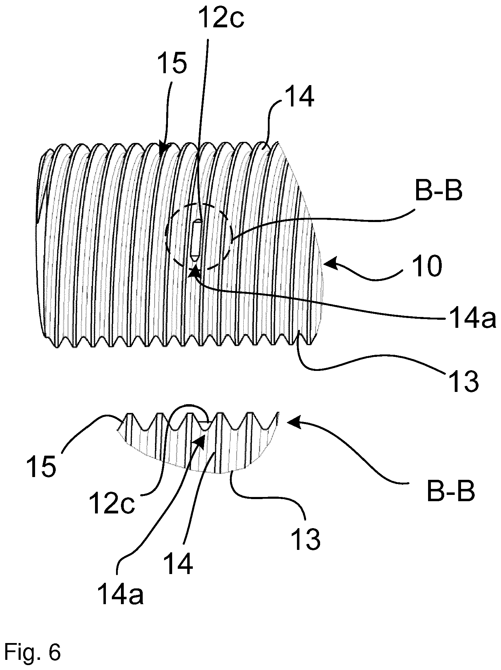

In Fig. 6 ist die Stellspindel nach Fig. 1 und Fig. 2 mit einer durch Klebemittel bzw. Lot- oder Schweißmaterial realisierten Begrenzung 12c aus einer Draufsicht gezeigt. Deutlich zu erkennen ist die radiale Ausprägung der Begrenzung 12.

### Bezugszeichenliste als Teil der Beschreibung

- 1: Scheibenbremse
- 2: Druckstück
- 3, 3a: Bremsbeläge
- 4: Öffnung des Druckstücks 2
- 5: Gewindeeinheit
- 5a: Anschlag, Zahnflanke
- 6: Bremssattel
- 6a: Innenwand des Bremssattels 6
- 7: Bremsenträger
- 8, 8a: Führungsbolzen
- 10: Stellspindel
- 10a: Druckteller
- 11: Gewindegang
- 11a: Gewindegangspitze
- 12-12c: Begrenzung
- 13: Gewindegrund
- 13a: Bereich des Gewindegrunds 13
- 14, 14a, 14b: Gewindeflanke
- 15: Gewinde
- 17: Zuspanneinheit
- 18: Drehhebel
- 19: Bremsscheibe
- 20: Nachstelleinheit
- 21: Federelemente
- 21a: Schlingfeder
- 22: Führungsbuchsen
- 23: Endbereich der Stellspindel 10
- 24: Wirkdurchmesser
- L: Lüftspiel
- A: axiale Achse der Stellspindel (10)
- AB: axiale Achse der Scheibenbremse 1
- S: Abstand des Anschlags 5 bezogen auf die axiale Achse A

## Patentansprüche

1. Scheibenbremse (1) für Kraftfahrzeuge umfassend ein entlang einer axialen Achse (AB) der Scheibenbremse (1) angeordnetes Druckstück (2), zumindest eine Stellspindel (10) mit einem Gewinde (15), wobei das Gewinde (15) mindestens einen Gewindegang (11) aufweist, und eine Nachstelleinheit (20) zum Einstellen des Lüftspiels (L) der Scheibenbremse (1), wobei die Stellspindel (10) axial zumindest abschnittsweise durch eine mit einer Gewindeeinheit (5) versehenen Öffnung (4) des Druckstücks (2) geführt ist und wobei die Stellspindel (10) zumindest abschnittsweise durch die Nachstelleinheit (20) geführt ist und die Nachstelleinheit (20) axial zumindest teilweise in die Öffnung (4) des Druckstücks (2) hineinragt, **dadurch gekennzeichnet, dass** die Stellspindel (10) in dem Gewindegang (11) eine Begrenzung (12, 12a, 12b, 12c) aufweist.

2. Scheibenbremse (1) nach Anspruch 1, **dadurch gekennzeichnet, dass** die Begrenzung (12, 12a, 12b, 12c), ausgehend von einem Gewindegrund (13) des Gewindegangs (11) der Stellspindel (10), radial in Richtung der Nachstelleinheit (20) ausgebildet ist.

3. Scheibenbremse (1) nach Anspruch 1, **dadurch gekennzeichnet, dass** die Begrenzung (12, 12a, 12b, 12c) ein Teilbereich (14a) einer Gewindeflanke (14) der Stellspindel (10) oder dass die Begrenzung (12, 12a, 12b, 12c) ein Teilbereich (14b) der Spindel (10) ist.

4. Scheibenbremse (1) nach einem der vorangegangenen Ansprüche, **dadurch gekennzeichnet, dass** die Begrenzung (12, 12a, 12b, 12c) durch eines der Herstellungsverfahren umfassend spanende Fertigung, formgebende Fertigung oder materialauftragende Fertigung gefertigt ist.

5. Scheibenbremse (1) nach Anspruch 4, **dadurch gekennzeichnet, dass** die Begrenzung (12, 12a, 12b, 12c) durch das Herstellungsverfahren formgebende Fertigung hergestellt ist und die formgebende Fertigung ein Walzprozess ist.

6. Scheibenbremse (1) nach Anspruch 3, **dadurch gekennzeichnet, dass** der als Teil der Gewindeflanke (14) ausgebildete Begrenzung (12, 12b, 12c) durch einen Umformvorgang deformiert ist.

7. Scheibenbremse (1) nach Anspruch 2, **dadurch gekennzeichnet, dass** die Begrenzung (12, 12a, 12b, 12c) in radialer Ausprägung eine Abmessung aufweist, die größer ist als der Abstand (S) eines Anschlags (5a) der Gewindeeinheit (5), bezogen auf eine axiale Achse (A) der Stellspindel (10).

8. Scheibenbremse (1) nach einem der vorangegangenen Ansprüche, **dadurch gekennzeichnet, dass** die Begrenzung (12, 12a, 12b, 12c) dazu eingerichtet ist, an einen Anschlag (5a) der Gewindeeinheit (5) anzustoßen und ein axiales Herausdrehen der Stellspindel (10) in Richtung einer Bremsscheibe der Scheibenbremse (1) zu verhindern.

## Claims

1. Disk brake (1) for motor vehicles, comprising a pressure piece (2) arranged along an axial axis (AB) of the disk brake (1), at least one adjusting spindle (10) having a thread (15), the thread (15) having at least one thread turn (11), and comprising an adjustment unit (20) for adjusting the clearance (L) of the disk brake (1), the adjusting spindle (10) being guided axially at least in portions through an opening (4) of the pressure piece (2) provided with a threaded unit (5), and the adjusting spindle (10) being guided at least in portions through the adjustment unit (20) and the adjustment unit (20) projecting axially at least in part into the opening (4) of the pressure piece (2), **characterized in that** the adjusting spindle (10) has a limit stop (12, 12a, 12b, 12c) in the thread turn (11).

2. Disk brake (1) according to claim 1, **characterized in that** the limit stop (12, 12a, 12b, 12c), starting from a thread root (13) of the thread turn (11) of the adjusting spindle (10), is formed radially in the direction of the adjustment unit (20).

3. Disk brake (1) according to claim 1, **characterized in that** the limit stop (12, 12a, 12b, 12c) is a portion (14a) of a thread flank (14) of the adjusting spindle (10) or **in that** the limit stop (12, 12a, 12b, 12c) is a portion (14b) of the spindle (10).

4. Disk brake (1) according to any of the preceding claims,
**characterized in that** the limit stop (12, 12a, 12b, 12c) is manufactured by one of the production methods comprising material-removal manufacturing, shaping manufacturing, or material-applying manufacturing.

5. Disk brake (1) according to claim 4, **characterized in that** the limit stop (12, 12a, 12b, 12c) is produced by the production method of shaping manufacturing and the shaping manufacturing is a rolling process.

6. Disk brake (1) according to claim 3, **characterized in that** the limit stop (12, 12b, 12c) formed as part of the thread flank (14) is deformed by a deformation process.

7. Disk brake (1) according to claim 2, **characterized in that** the limit stop (12, 12a, 12b, 12c) has a dimension in radial form which is greater than the distance (S) of a stop (5a) of the threaded unit (5), in relation to an axial axis (A) of the adjusting spindle (10).

8. Disk brake (1) according to any of the preceding claims,
**characterized in that** the limit stop (12, 12a, 12b, 12c) is configured to strike against a stop (5a) of the threaded unit (5) and to prevent axial unscrewing of the adjusting spindle (10) in the direction of a brake disk of the disk brake (1).

## Revendications

1. Frein à disque (1) pour véhicules automobiles, comprenant une pièce de poussée (2) disposée le long d'un axe axial (AB) du frein à disque (1), au moins une broche de réglage (10) comportant un filetage (15), le filetage (15) présentant au moins un pas de filetage (11), et une unité de réajustement (20) permettant d'ajuster le jeu (L) du frein à disque (1), la broche de réglage (10) étant guidée axialement, au moins dans certaines régions, à travers une ouverture (4), pourvue d'une unité de filetage (5), de la pièce de poussée (2) et la broche de réglage (10) étant guidée, au moins dans certaines régions, à travers l'unité de réajustement (20) et l'unité de réajustement (20) faisant saillie axialement, au moins partiellement, dans l'ouverture (4) de la pièce de poussée (2),
**caractérisé en ce que** la broche de réglage (10) présente une délimitation (12, 12a, 12b, 12c) dans le pas de filetage (11).

2. Frein à disque (1) selon la revendication 1, **caractérisé en ce que** la délimitation (12, 12a, 12b, 12c) est réalisée radialement dans la direction de l'unité de réajustement (20), à partir d'une base de filetage (13) du pas de filetage (11) de la broche de réglage (10).

3. Frein à disque (1) selon la revendication 1, **caractérisé en ce que** la délimitation (12, 12a, 12b, 12c) est une zone partielle (14a) d'un flanc de filetage (14) de la broche de réglage (10), **ou en ce que** la délimitation (12, 12a, 12b, 12c) est une zone partielle (14b) de la broche (10).

4. Frein à disque (1) selon l'une quelconque des revendications précédentes, **caractérisé en ce que** la délimitation (12, 12a, 12b, 12c) est fabriquée par l'un des procédés de fabrication comprenant la fabrication par enlèvement de copeaux, la fabrication par formage ou la fabrication par ajout de matière.

5. Frein à disque (1) selon la revendication 4, **caractérisé en ce que** la délimitation (12, 12a, 12b, 12c) est fabriquée par le procédé de fabrication de fabrication par formage et la fabrication par formage est un processus de laminage.

6. Frein à disque (1) selon la revendication 3, **caractérisé en ce que** la délimitation (12, 12b, 12c) réalisée en tant que partie du flanc de filetage (14) est déformée par une opération de déformation.

7. Frein à disque (1) selon la revendication 2, **caractérisé en ce que** la délimitation (12, 12a, 12b, 12c) présente, dans un prolongement radial, une dimension supérieure à la distance (S) d'une butée (5a) de l'unité de filetage (5) par rapport à un axe axial (A) de la broche de réglage (10).

8. Frein à disque (1) selon l'une quelconque des revendications précédentes, **caractérisé en ce que** la délimitation (12, 12a, 12b, 12c) est conçue pour s'appuyer contre une butée (5a) de l'unité de filetage (5) et pour empêcher un dévissage axial de la broche de réglage (10) dans la direction d'un disque de frein du frein à disque (1).
